# EUROPÄISCHE PATENTSCHRIFT

(11) **EP 1 950 596 B1**
(45) Veröffentlichungstag und Bekanntmachung des Hinweises auf die Patenterteilung: **26.05.2010**
(21) Anmeldenummer: 08001081.2
(22) Anmeldetag: 22.01.2008
(51) Int. Cl.: G02B 21/14

(54) **Optische Anordnung zur Phasenkontrast-Beobachtung**
Optical device for observing phase contrast
Dispositif optique d'observation du contraste de phase

(30) Priorität: 29.01.2007 DE 102007004333
(43) Veröffentlichungstag der Anmeldung: 30.07.2008
(73) Patentinhaber: Carl Zeiss MicroImaging GmbH, 07745 Jena (DE)
(72) Erfinder: Danz Rainer, 07768 Kahla (DE); Thirase, Jan dr., 37085 Göttingen (DE); Schaffer, Jörg Dr., 37085 Göttingen (DE); Vogelgsang, Anke, 37081 Göttingen (DE); Zölffel, Michael, Dr., 37077 Göttingen (DE)
(74) Vertreter: Scholze, Humbert

(56) Entgegenhaltungen:
- EP-A- 0 069 263
- CH-A- 329 440
- DE-A1- 2 025 509
- GB-A- 648 801
- GB-A- 1 088 837

## Beschreibung

Die Erfindung bezieht sich auf eine optische Anordnung zur Phasenkontrast-Beobachtung einer Probe, insbesondere für Mikroskope, bei der in
- einem von der Probe kommenden Beobachtungsstrahlengang ein optisches Element angeordnet ist, dessen Lichteintritts- oder Lichtaustrittsfläche partiell in vorgegebenen Flächenbereichen mit einer die Phase des Lichts beeinflussenden Beschichtung versehen ist, und
- in einem auf die Probe gerichteten Beleuchtungsstrahlengang eine Blendeneinrichtung angeordnet ist, deren Blendenöffnungen zur Abbildung auf die beschichteten Flächenbereiche vorgesehen sind, wobei
- mindestens ein Flächenbereich vorhanden ist mit einer Beschichtung, die eine negative Verschiebung der Phase bewirkt,
- mindestens ein weiterer Flächenbereich vorhanden ist mit einer Beschichtung, die eine positive Verschiebung der Phase bewirkt, und dass
- Mittel vorhanden sind zur Abbildung von Blendenöffnungen wahlweise auf die Flächenbereiche, deren Beschichtung eine negative Verschiebung der Phase bewirkt, oder auf die Flächenbereiche, deren Beschichtung eine positive Verschiebung der Phase bewirkt, oder
- Mittel vorhanden sind zur Abbildung von Blendenöffnungen zum Teil auf die Flächenbereiche, deren Beschichtung eine negative Verschiebung der Phase bewirkt und zum Teil auf die Flächenbereiche, deren Beschichtung eine positive Verschiebung der Phase bewirkt.

Die Beobachtung mittels Phasenkontrast als Verfahrensweise zum Sichtbarmachen von nichtabsorbierenden Strukturen in oder auf Probensubstanzen ist an sich bekannt.

Seit der Erfindung des Phasenkontrastverfahrens durch Frits Zernike [Z. Physik 36 (1934), 848-851)] und der Perfektionsierung desselben durch A. Köhler und W. Loos [Die Naturwissenschaften, 29, Heft 4, (1941)] sowie durch Hermann Beyer [Jenaer Jg. (1953), 162-209)] bedient man sich zur praktischen Durchführung des Phasenkontrastverfahrens in der Mikroskopie vorwiegend spezieller Objektive, die am Ort ihrer engsten Lichtbündeleinschnürung (Pupille bzw. hintere Brennebene) Beschichtungen aufweisen, die die Phase des Lichts beeinflussen.

Diese Beschichtungen bzw. Beläge drehen den Phasenwinkel des direkten Lichtes gegenüber dem Phasenwinkel des am Objekt gebeugten Lichtes derart, dass die Stellen im Präparat, welche bedingt durch Brechzahl- und/oder Dickenunterschiede gegenüber ihrer unmittelbaren Umgebung die Phase unterschiedlich ändern, in verschiedenen Intensitäten im mikroskopischen Bild erscheinen.

Die bei konventioneller Hellfeldabbildung unsichtbaren Phasenobjekte werden somit in Abhängigkeit von der Phasendrehung des Objektes und der Dimensionierung der Objektiv-Phasenringe, insbesondere im Hinblick auf Geometrie und Phasendrehung gegenüber ihrer Umgebung, mehr oder weniger kontrastreich abgebildet.

Die relative Phasendrehung der Objektiv-Phasenringe kann +π/2 oder -π/2 betragen. Mit anderen Worten: das Phasenobjektiv erzeugt entweder positiven oder negativen Phasenkontrast. Um mit einem einzigen Objektiv beide Phasenkontrastverfahren nacheinander durchführen zu können, müssen bislang aufwendige und kostenintensive Zwischenabbildungssystem verwendet werden, wie dies beispielsweise in CH 453743, DD 143183 und DD 218691 beschrieben ist.

M. Pluta [Patent Specification 1088837, 05.11.1964] beschreibt ein "Phasenkontrastmikroskop mit veränderbarem Phasenkontrast", bei dem mit Hilfe zweier konzentrischer Objektiv-Phasenringe unterschiedlicher relativer Phasendrehung kontinuierlich von positivem zu negativem und zu einem Quasi-Hellfeld umgeschaltet werden kann. Die Anordnung benötigt allerdings eine Kombination aus vor dem Kondensor angeordneten Polarisationsfiltern, welche entweder den positiven oder negativen Objektiv-Phasenbelag freigeben.

In GB-A-1 088 037 wird eine Anordnung zur Phasenkontrast - Beobachtung einer Probe, insbesondere für Mikroskope, beschrieben, bei der mindestens zwei konzentrisch angeordnete, kreisringförmige Flächenbereiche mit unterschiedlichen Durchmessern (Kreisumfänge) vorgesehen sind, wobei ein Flächenbereich eine positive Verschiebung der Phase bewirkt und der andere Flächenbereich zu einer negativen Verschiebung der Phase führt. Nachteilig hierbei ist, dass die Flächenbereiche nicht gleichmäßig auf das einfallende Licht wirken.

Von diesem Stand der Technik ausgehend besteht die Aufgabe der Erfindung darin, eine optische Anordnung zur Phasenkontrast-Beobachtung zu schaffen, welche die Nachteile, die dem Stand der Technik anhaften, beseitigt und mit der es möglich ist in einfacher Weise eine Probe entweder im positiven oder im negativen Phasenkontrast zu beobachten.

Diese der Erfindung zugrunde liegende Aufgabe wird bei einer optischen Anordnung zur Phasenkontrast-Beobachtung der eingangs beschrieben Art durch die Merkmale des Patentanspruchs 1 gelöst, wobei die Flächenbereiche mit der Beschichtung, die eine negative Verschiebung der Phase bewirkt und die Flächenbereiche mit der Beschichtung, die eine positive Verschiebung der Phase bewirkt kreisringsegmentförmig ausgebildet und auf einem Kreisumfang alternierend angeordnet sind.

Da die alternierend angeordneten Flächenbereiche auf dem gleichen Durchmesser, beziehungsweise Kreisumfang eines Kreisringes liegen, wirken diese gleichmäßig auf das eingestrahlte Licht.

Vorteilhafte Ausgestaltungen sind in den Unteransprüchen 2 bis 4 angegeben.

Bei einer vorteilhaften Ausgestaltung der Erfindung weist die Blendeneinrichtung eine Blende mit mehreren Blendenöffnungen auf, die in Form und Größe den beschichteten kreissegmentförmigen Flächenbereichen entsprechen. Dabei sind die Blendenöffnungen und die Flächenbereiche relativ zueinander verstellbar, so dass in einer ersten Verstellposition die Blendenöffnungen auf die Flächenbereiche abgebildet sind, deren Beschichtung eine negative Verschiebung der Phase bewirkt, und in einer zweiten Verstellposition die Blendenöffnungen auf die Flächenbereiche abgebildet sind, deren Beschichtung eine positive Verschiebung der Phase bewirkt.

Um dies zu erreichen, kann in alternativen Ausgestaltungen der Erfindung entweder eine Verstellung der Blende oder eine Verstellung der beschichteten Flächenbereiche vorgesehen sein, wie weiter unten anhand eines Ausführungsbeispieles näher erläutert wird.

Bei dieser Blendenanordnung kann die Blende in der Eintrittspupille eines Mikroskopobjektivs angeordnet sein und sich dabei in einer Position befinden, die zur Position der kreissegmentförmigen Flächenbereiche konjugiert ist.

In dieser Ausgestaltung der Erfindung können die kreissegmentförmigen Flächenbereiche mit der Beschichtung, die eine negative Verschiebung der Phase bewirkt, charakterisiert sein durch φ = -π/2, τ = 25% und Γ ≤ 1, und die kreissegmentförmigen Flächenbereiche mit der Beschichtung, die eine positive Verschiebung der Phase bewirkt, durch φ = +π/2, τ = 10% und Γ ≤ 2,5, mit φ der Phasenverschiebung, τ der relativen Durchlässigkeit und Γ dem Beyerschen Gammaparameter.

Denkbar und im Rahmen der Erfindung liegt auch eine Ausführung mit zwei Flächenbereichen und zwei Blendenöffnungen, die jeweils die Form von halben Ringen haben. Dabei ist ein Flächenbereich mit einer die Phase positiv und der andere mit einer die Phase negativ verschiebenden Beschichtung versehen. Die Halbringe können mit jeweils gleichen Innen- und Außendurchmessern ausgeführt sein.

Die Erfindung soll nachfolgend anhand eines Ausführungsbeispiels näher erläutert werden. In den zugehörigen Zeichnungen zeigen
- Fig.1: die Draufsicht auf eine in der Austrittspupille eines Mikroskopobjektivs angeordnete optisch wirksame Fläche mit mehreren kreissegmentförmigen Flächenbereichen, die mit einer die Phase des Lichts verändernden Schicht versehen sind,
- Fig.2a und Fig.2b: eine Blende, die in der Eintrittspupille eines Mikroskopobjektivs angeordnet ist und deren Position im Mikroskopstrahlengang zur Position der Flächenbereiche konjugiert ist.

Die nachfolgende Erläuterung des Erfindungsgegenstandes anhand des Ausführungsbeispiels erfolgt der Übersichtlichkeit halber im Zusammenhang mit der Verwendung in einem Mikroskop.

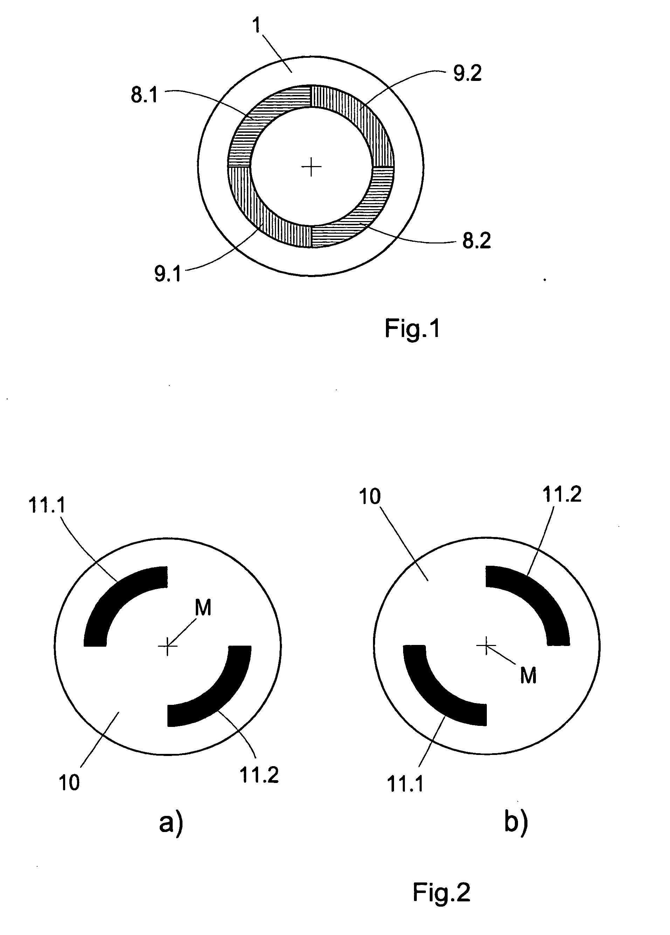

Davon ausgehend ist nach Fig.1 die Lichtaustrittsfläche 1 eines optischen Elementes, das in diesem Fall Bestandteil eines Mikroskopobjektivs ist, mit mehreren beschichteten Flächenbereichen 8.1, 8.2, 9.1 und 9.2 versehen. Davon sollen die Flächenbereiche 8.1 und 8.2 eine negative, die Flächenbereiche 9.1 und 9.2 eine positive Verschiebung der Phase des Lichts bewirken, das durch das Mikroskopobjektiv hindurchtritt.

In dieser Ausgestaltung der Erfindung können die Flächenbereiche 8.1 und 8.2 mit der Beschichtung, die eine negative Verschiebung der Phase bewirkt, charakterisiert sein durch φ = -π/2, τ = 25% und Γ ≤ 1, und die Flächenbereiche 9.1 und 9.2 mit der Beschichtung, die eine positive Verschiebung der Phase bewirkt, durch φ = +π/2, τ = 10% und Γ ≤ 2,5. Auch hier gilt: φ die Phasenverschiebung, τ die relative Durchlässigkeit, Γ der Beyersche Gammaparameter.

In dieser Ausführung der Erfindung ist in der Eintrittspupille des Mikroskopobjektivs eine Blendeneinrichtung angeordnet, die eine verstellbare Blende 10 mit mehreren kreissegmentförmigen Blendenöffnungen 11.1 und 11.2 umfasst. Eine derartige Blende 10 ist symbolisch in Fig.2 dargestellt. Die Blendenöffnungen 11.1 und 11.2 entsprechen in Form und Größe den beschichteten kreissegmentförmigen Flächenbereichen 8.1, 8.2, 9.1 und 9.2 auf der Lichtaustrittsfläche 1.

Die Blendenöffnungen 11.1 und 11.2 der Blende 10 sind relativ zu den Flächenbereichen 8.1, 8.2, 9.1 und 9.2 verstellbar. Zum Zwecke der Verstellung ist die Blende 10 um einen Drehpunkt M drehbar gelagert, der bevorzugt in der optischen Achse des Beleuchtungsstrahlengangs liegt. Eine erste mögliche Verstellposition ist in Fig.2a dargestellt, eine zweite mögliche Verstellposition in Fig.2b.

Im Rahmen der Erfindung liegen auch derartige Ausgestaltungen, bei denen nicht wie vorstehend beschrieben die Blende 10 mit den Blendenöffnungen 11.1 und 11.2 verstellt wird, sondern anstelle der Blende 10 die Lage der Flächenbereichen 8.1, 8.2, 9.1 und 9.2 so verändert wird, dass sich in analoger Weise die Verstellpositionen nach Fig.2a und Fig.2b ergeben.

In der Verstellposition nach Fig.2a werden die Blendenöffnungen 11.1 und 11.2 auf die Flächenbereiche 8.1 und 8.2 abgebildet. Die Blende 10 befindet sich an einer Position im Mikroskopstrahlengang, die zu der Position der Lichtaustrittsfläche 1 mit den kreissegmentförmigen Flächenbereichen 8.1, 8.2, 9.1 und 9.2 konjugiert ist.

In der Verstellposition Fig.2a tritt das Beleuchtungslicht durch die Blendenöffnungen 11.1 und 11.2 hindurch und bildet diese auf die Flächenbereiche 8.1 und 8.2 ab, die eine negative Verschiebung der Phase des Beleuchtungslichts bewirken. Die Beobachtung der Probe erfolgt im positiven Phasenkontrast.

Ist dagegen die Beobachtung der Probe im negativen Phasenkontrast beabsichtigt, erfolgt eine Verstellung der Blende 10 durch Drehung um den Mittelpunkt M um einen Winkel von 90°, so dass sich die verstellposition nach Fig.2b ergibt.

In dieser Verstellposition werden die Blendenöffnungen 11.1 und 11.2 auf die Flächenbereiche 9.1 und 9.2 abgebildet, die eine positive Verschiebung der Phase des Beleuchtungslichts bewirken. Die Beobachtung der Probe erfolgt nun im negativen Kontrast.

Alternativ zu der Variante mit vier Flächenbereichen 8.1, 8.2, 9.1 und 9.2 können auch nur zwei kreissegmentförmige Flächenbereiche vorgesehen sein, wobei ein erster mit einer Beschichtung versehen ist, die eine negative Verschiebung der Phase bewirkt, und der zweite mit einer Beschichtung versehen ist, die eine positive Verschiebung der Phase bewirkt. Dabei hat jeder der beiden Flächenbereiche die Form eines halben Ringes. Die Blende ist dann entsprechend gestaltet und hat analog zu den beiden Flächenbereichen zwei halbkreisförmige Blendenöffnungen.

Mit dem vorbeschriebenen Ausführungsbeispiel wird die Aufgabe gelöst, die der Erfindung zugrunde liegt, nämlich in einfacher, unkomplizierter Weise die Beobachtung der Probe wahlweise entweder im positiven oder im negativen Phasenkontrast zu ermöglichen.

Das anhand von Fig.1 und Fig.2 erläuterte Ausführungsbeispiel kann erfindungsgemäß auch so ausgestaltet sein, dass die Blendenöffnungen 11.1 und 11.2 lediglich zum Teil auf die Flächenbereiche 8.1, 8.2 abgebildet werden, deren Beschichtung eine negative Verschiebung der Phase bewirkt und zum übrigen Teil auf die Flächenbereiche 9.1, 9.2 abgebildet werden, deren Beschichtung eine positive Verschiebung der Phase bewirkt.

Dies wird durch Variation des Drehwinkels bei der Drehung der Blende 10 um den Drehpunkt M erreicht, so dass sich Verstellpositionen ergeben, bei denen sich Blendenöffnungen 11.1, 11.2 und Flächenbereichen 8.1, 8.2, 9.1, 9.2 nicht ganzflächig, sondern jeweils nur abschnittweise überdecken. Damit ist die Einstellung kontinuierlicher Übergangszustände zwischen der Beobachtung der Probe im positiven Phasenkontrast und der Beobachtung im negativen Phasenkontrast möglich.

Im Übrigen ist der Gegenstand der Erfindung nicht auf das beschriebene Ausführungsbeispiel beschränkt, sondern schließt alle Ausgestaltungen mit ein, die das dargestellte Prinzip verwirklichen. Dazu gehören auch Ausgestaltungen, bei denen nicht die Blendenöffnungen, sondern die beschichteten Flächenbereiche in ihrer Position so verändert werden, dass entweder eine negative oder eine positive Phasenverschiebung bewirkt wird.

Des Weiteren liegen auch Ausgestaltungen im Rahmen der Erfindung, bei denen die erforderlichen Blendenöffnungen auf mehrere Blenden verteilt sind.

### Bezugszeichenliste

- 1: Lichtaustrittsöffnung
- 8.1, 8.2: Flächenbereiche
- 9.1, 9.2: Flächenbereiche
- 10: Blende
- 11.1, 11.2: Blendenöffnungen

## Patentansprüche

1. Optische Anordnung zur Phasenkontrast-Beobachtung einer Probe, insbesondere für Mikroskope, umfassend
- ein in einem von der Probe kommenden Beobachtungsstrahlengang angeordnetes optisches Element, dessen Lichteintritts- oder Lichtaustrittsfläche partiell in vorgegebenen Flächenbereichen mit einer die Phase des Lichts beeinflussenden Beschichtung versehen ist, und
- eine in einem auf die Probe gerichteten Beleuchtungsstrahlengang angeordnete Blendeneinrichtung, deren Blendenöffnungen zur Abbildung auf die beschichteten Flächenbereiche vorgesehen sind,
- mindestens ein Flächenbereich (8.1, 8.2) vorhanden ist mit einer Beschichtung, die eine negative Verschiebung der Phase bewirkt,
- mindestens ein weiterer Flächenbereich (9.1, 9.2) vorhanden ist mit einer Beschichtung, die eine positive Verschiebung der Phase bewirkt, und dass
- Mittel vorhanden sind zur Abbildung von Blendenöffnungen (11.1, 11.2) wahlweise auf die Flächenbereiche (8.1, 8.2), deren Beschichtung eine negative Verschiebung der Phase bewirkt, oder auf die Flächenbereiche (9.1, 9.2), deren Beschichtung eine positive Verschiebung der Phase bewirkt, oder
- Mittel vorhanden sind zur Abbildung von Blendenöffnungen (11.1, 11.2) zum Teil auf die Flächenbereiche (8.1, 8.2), deren Beschichtung eine negative Verschiebung der Phase bewirkt und zum Teil auf die Flächenbereiche (9.1, 9.2), deren Beschichtung eine positive Verschiebung der Phase bewirkt,
**dadurch gekennzeichnet, dass**
die Flächenbereiche (8.1, 8.2) mit der Beschichtung, die eine negative Verschiebung der Phase bewirkt und die Flächenbereiche (9.1, 9.2) mit der Beschichtung, die eine positive Verschiebung der Phase bewirkt kreisringsegmentförmig ausgebildet und auf einem Kreisumfang alternierend angeordnet sind.

2. Optische Anordnung nach Anspruch 1, bei der die Blendeneinrichtung eine Blende (10) mit mehreren kreisringsegmentförmigen Blendenöffnungen (11.1, 11.2) aufweist, wobei
- die Blendenöffnungen (11.1, 11.2) in Form und Größe den beschichteten kreisringsegmentförmigen Flächenbereichen (8.1, 8.2, 9.1, 9.2) entsprechen, und
- die Blendenöffnungen (11.1, 11.2) und die kreisringsegmentförmigen Flächenbereiche (8.1, 8.2, 9.1, 9.2) relativ zueinander verstellbar sind, so dass
- in wahlweise vorzugebenden Verstellpositionen die Blendenöffnungen (11.1, 11.2) abgebildet sind
- auf die kreisringsegmentförmigen Flächenbereiche (8.1, 8.2), deren Beschichtung eine negative Verschiebung der Phase bewirkt, oder
- auf die kreisringsegmentförmigen Flächenbereiche (9.1, 9.2), deren Beschichtung eine positive Verschiebung der Phase bewirkt, oder
- zum Teil auf kreisringsegmentförmigen Flächenbereiche (8.1, 8.2), deren Beschichtung eine negative Verschiebung der Phase bewirkt und zum Teil auf kreisringsegmentförmigen Flächenbereiche (9.1, 9.2), deren Beschichtung eine positive Verschiebung der Phase bewirkt.

3. Optische Anordnung nach den Ansprüchen 1 und 2, bei der die Blende (10) in der Eintrittspupille eines Mikroskopobjektivs angeordnet und zur Position der kreisringsegmentförmigen Flächenbereiche (8.1, 8.2, 9.1, 9.2) im Mikroskopstrahlengang konjugiert ist.

4. Optische Anordnung nach einem der Ansprüche 1 bis 3, bei welcher
- die kreisringsegmentförmigen Flächenbereiche (8.1, 8.2) mit der Beschichtung, die eine negative Verschiebung der Phase bewirkt, charakterisiert sind durch φ = -π/2, τ = 25% und Γ ≤ 1, und
- die kreisringsegmentförmigen Flächenbereiche (9.1, 9.2) mit der Beschichtung, die eine positive Verschiebung der Phase bewirkt, charakterisiert sind durch φ = +π/2, τ = 10% und Γ ≤ 2,5,
mit φ der Phasenverschiebung, τ der relativen Durchlässigkeit und r dem Beyerschen Gammaparameter.

## Claims

1. Optical arrangement for observing the phase contrast of a sample, in particular for microscopes, comprising
- an optical element which is arranged in an observation beam path coming from the sample and whose light entrance or light exit surface is partially provided in prescribed surface regions with a coating influencing the phase of the light, and
- a diaphragm device which is arranged in an illumination beam path directed onto the sample, and whose diaphragm openings are provided for imaging onto the coated surface regions,
- at least one surface region (8.1, 8.2) is present which has a coating which effects a negative phase shift,
- at least one further surface region (9.1, 9.2) is present which has a coating that effects a positive phase shift, and
- means are present for imaging diaphragm openings (11.1, 11.2) optionally onto the surface regions (8.1, 8.2) whose coating effects a negative phase shift, or onto the surface regions (9.1, 9.2) whose coating effects a positive phase shift, or
- means are present for imaging diaphragm openings (11.1, 11.2) partly onto the surface regions (8.1, 8.2) whose coating effects a negative phase shift, and partly onto the surface regions (9.1, 9.2) whose coating effects a positive phase shift,
**characterized in that**
the surface regions (8.1, 8.2) with the coating which effects a negative phase shift, and the surface regions (9.1, 9.2) with the coating which effects a positive phase shift are designed in the form of annular segments and are arranged in alternating fashion on a circular periphery.

2. Optical arrangement according to Claim 1, in which the diaphragm device has a diaphragm (10) with a plurality of diaphragm openings (11.1, 11.2) in the form of annular segments,
- the diaphragm openings (11.1, 11.2) corresponding in shape and size to the coated surface regions (8.1, 8.2, 9.1, 9.2) in the form of annular segments, and
- the diaphragm openings (11.1, 11.2) and the surface regions (8.1, 8.2, 9.1, 9.2) in the form of annular segments can be adjusted relative to one another such that,
- in optionally prescribable adjustment positions the diaphragm openings (11.1, 11.2) are imaged
- onto the surface regions (8.1, 8.2) which are in the form of annular segments and whose coating effects a negative phase shift, or
- onto the surface regions (9.1, 9.2) which are in the form of annular segments and whose coating effects a positive phase shift, or
- partly onto surface regions (8.1, 8.2) which are in the form of annular segments and whose coating effects a negative phase shift, and partly onto surface regions (9.1, 9.2) which are in the form of annular segments and whose coating effects a positive phase shift.

3. Optical arrangement according to Claims 1 and 2, in which the diaphragm (10) is arranged in the entrance pupil of a microscope objective and is conjugate to the position of the surface regions (8.1, 8.2, 9.1, 9.2) in the form of annular segments in the microscope beam path.

4. Optical arrangement according to one of Claims 1 to 3, in which
- the surface regions (8.1, 8.2) which are in the form of annular segments and have the coating which effects a negative phase shift are **characterized by** Φ = -π/2, τ = 25% and Γ ≤ 1, and
- the surface regions (9.1, 9.2) which are in the form of annular segments and have the coating which effects a positive phase shift are **characterized by** Φ = +π/2, τ = 10% and Γ ≤ 2.5, where Φ is the phase shift, τ the relative permeability and r Beyer's gamma parameter.

## Revendications

1. Dispositif optique d'observation du contraste de phase d'un échantillon, notamment pour des microscopes, comprenant
- un élément optique disposé dans un des chemins optiques d'observation provenant de l'échantillon, dont la surface d'entrée de la lumière ou de sortie de la lumière est partiellement pourvu d'un revêtement influençant la phase de la lumière dans une zone définie, et
- un équipement de diaphragme disposé dans le chemin optique d'éclairage dirigé sur l'échantillon, dont les ouvertures des diaphragmes sont prévues pour la reproduction sur les zones revêtues,
- il existe au moins une des zones (8.1, 8.2) avec un revêtement produisant un décalage négatif de la phase,
- il existe au moins une des autres zones (9.1, 9.2) avec un revêtement produisant un décalage positif de la phase, et
- il existe des moyens de reproduction d'ouvertures des diaphragmes (11.1, 11.2) au choix sur les zones (8.1, 8.2) dont le revêtement produit un décalage négatif de la phase, ou sur les zones (9.1, 9.2) dont le revêtement produit un décalage positif de la phase, ou
- il existe des moyens de reproduction d'ouvertures des diaphragmes (11.1, 11.2) partiellement sur les zones (8.1, 8.2) dont le revêtement produit un décalage négatif de la phase et partiellement sur les zones (9.1, 9.2) dont le revêtement produit un décalage positif de la phase,
**caractérisé en ce que**
les zones (8.1, 8.2) avec le revêtement produisant un décalage négatif de la phase et les zones (9.1, 9.2) avec le revêtement produisant un décalage positif de la phase sont réalisées en forme de segments de couronnes circulaires et sont disposées alternativement sur un circonférence.

2. Dispositif optique selon la revendication 1, dans lequel l'équipement de diaphragme comporte un diaphragme (10) avec plusieurs ouvertures de diaphragme (11.1, 11.2) en forme de segments de couronnes circulaires, dans lequel
- les ouvertures de diaphragme (11.1, 11.2) correspondent à la forme et à la dimension des zones revêtues (8.1, 8.2, 9.1, 9.2) en forme de segments de couronnes circulaires, et
- les ouvertures de diaphragme (11.1, 11.2) et les zones (8.1, 8.2, 9.1, 9.2) en forme de segments de couronnes circulaires sont réglables les unes par rapport aux autres, de telle sorte que
- les ouvertures de diaphragme (11.1, 11.2) sont reproduites dans des positions de réglage à définir au choix
- sur les zones (8.1, 8.2) en forme de segments de couronnes circulaires, dont le revêtement produit un décalage négatif de la phase, ou
- sur les zones (9.1, 9.2) en forme de segments de couronnes circulaires, dont le revêtement produit un décalage positif de la phase, ou
- partiellement sur des zones (8.1, 8.2) en forme de segments de couronnes circulaires, dont le revêtement produit un décalage négatif de la phase et partiellement sur les zones (9.1, 9.2) en forme de segments de couronnes circulaires, dont le revêtement produit un décalage positif de la phase.

3. Dispositif optique selon les revendications 1 ou 2, dans lequel le diaphragme (10) est disposé dans la pupille d'entrée d'un objectif de microscope et qu'il est conjugué à la position des zones (8.1, 8.2, 9.1, 9.2) en forme de segments de couronnes circulaires dans le chemin optique du microscope.

4. Dispositif optique selon une des revendications 1 à 3, dans lequel
- les zones (8.1, 8.2) en forme de segments de couronnes circulaires avec le revêtement produisant un décalage négatif de la phase, sont **caractérisées par** un φ = -π/2, τ = 25% et Γ ≤ 1, et.
- les zones (9.1, 9.2) en forme de segments de couronnes circulaires avec le revêtement produisant un décalage positif de la phase, sont **caractérisées par** un φ = +π/2, τ = 10% et Γ ≤ 2,5,
φ étant le décalage de phase, τ la transmission relative et r le paramètre gamma de Beyer.
